# FASCICULE DE BREVET EUROPEEN

(11) **EP 1 446 221 B1**
(45) Date de publication et mention de la délivrance du brevet: **25.01.2012**
(21) Numéro de dépôt: 02790542.1
(22) Date de dépôt: 25.10.2002
(51) Int. Cl.: B01J 8/02, B01J 8/04, B01D 3/00

(54) **DISPOSITIF DE DISTRIBUTION D'UN MELANGE POLYPHASIQUE SUR UN LIT DE SOLIDE GRANULAIRE COMPORTANT UN ELEMENT BRISE JET POREUX A REBORDS**
VORRICHTUNG ZUM VERTEILEN EINER MEHRPHASENMISCHUNG IN EINEM GRANULAT-FESTBETT DURCH EINEN STRAHLVERTEILER MIT AUFKANTUNG
DEVICE FOR DISTRIBUTING A POLYPHASE MIXTURE ON A GRANULAR SOLID BED COMPRISING A POROUS ANTI-SPLASH NOZZLE ELEMENT WITH FLANGES

(30) Priorité: 09.11.2001 FR 0114533
(43) Date de publication de la demande: 18.08.2004
(73) Titulaire: Institut Français du Pétrole, 92852 Rueil-Malmaison Cedex (FR)
(72) Inventeur: HARTER, Isabelle, F-69008 Lyon (FR); AGOERO, Robert, F-38200 Vienne (FR)
(86) Numéro de dépôt international: PCT/FR2002/003672
(87) Numéro de publication internationale: WO 2003/039733

(56) Documents cités:
- WO-A-97/46303
- FR-A- 2 807 673

## Description

La présente invention concerne un dispositif permettant d'optimiser la distribution d'un fluide comportant au moins une phase gazeuse et au moins une phase liquide à travers au moins un lit de solide granulaire, les dites phases étant introduites séparément ou dans un état plus ou moins mélangé et les dites phases étant en écoulement globalement descendant à travers le ou les lits de solide granulaire. L'invention s'applique à toute enceinte ou réacteur comportant dans sa zone supérieure une entrée d'un premier fluide liquide, une entrée distincte ou non de la précédente, d'un deuxième fluide gazeux et au moins un lit de solide granulaire situé à une distance suffisante de la zone supérieure pour permettre l'installation du dispositif selon la présente invention tel que décrit ci après.

Le dispositif peut être disposé :
- soit en tête de l'enceinte ou du réacteur, au dessus d'un premier lit de solide granulaire
- soit, entre deux lits granulaires successifs dans le cas où la dite enceinte comporte plusieurs lits de solide granulaire, disposés en série le long de l'enceinte et séparés d'une distance suffisante pour permettre l'installation du dit dispositif.

La présente invention trouve en particulier une application dans tous les cas où :
- la phase gazeuse est largement majoritaire par rapport à la phase liquide, c'est à dire dans les cas où le rapport volumique entre la phase gazeuse et la phase liquide est supérieur à 3 :1 et habituellement inférieur à 400 :1.
- la réaction mise en jeu est fortement exothermique et nécessite l'introduction d'un fluide auxiliaire, gazeux ou liquide, pour refroidir le mélange réactionnel. On parle souvent dans ce cas de fluide de « trempe » ou de « quench » pour désigner un tel fluide auxiliaire.
- la réaction mise en jeu nécessite un contact étroit entre les phases pour permettre la dissolution d'un composé, par exemple l'hydrogène, dans la phase liquide.

La présente invention s'applique en particulier dans le domaine des réactions d'hydrocraquage, d'hydrotraitement, d'hydrodésulfuration, d'hydrodéazotation, d'hydrogénations sélectives ou totales des coupes C2 à C5. Elle concerne l'hydrogénation sélective des essences de vapocraquage, l'hydrogénation des composes aromatiques dans les coupes aliphatiques et/ou naphténiques, l'hydrogénation des oléfines dans les coupes aromatiques. Elle peut trouver également des applications dans les réactions nécessitant un bon mélange des phases gazeuse et liquide , par exemple les réactions d'oxydation partielle ou totale, les réactions d'amination, d'acétyloxydation, d'ammoxydation et d'halogénation en particulier de chloration.

Dans le domaine spécifique des réactions d'hydrodésulfuration, d'hydrodéazotation, d'hydrocraquage pour atteindre des conversions poussées, par exemple pour obtenir un produit contenant moins de 30 ppm ( partie par million)de soufre, comme cela est requis par les nouvelles spécifications sur l'essence et le gazole, il est nécessaire d'avoir une très bonne distribution du liquide sachant qu'on se trouve avec des rapports volumétriques gaz sur liquide qui peuvent varier de 3/1 à 400:1 et le plus souvent de 10 :1 à 200 :1. Dans le cas de l'utilisation d'un fluide de trempe ou de « quench », il est particulièrement important d'assurer un très bon contact entre ce fluide de trempe , généralement gazeux, et les fluides du procédé. Compte tenu de la faible proportion de liquide par rapport au gaz, une des possibilités utilisée dans l'art antérieur consiste par exemple à utiliser des plateaux distributeurs comportant une pluralité de trous dédiés au passage du liquide et une pluralité de cheminées dédiées au passage du gaz. On trouvera par exemple des descriptions de tels dispositifs dans les brevets US 3 353 924, US 4 385 033, US 3 855 068.

Ces solutions posent cependant des problèmes en termes de-souplesse d'utilisation des plateaux, et peuvent également conduire à des irrégularités d'alimentation des différents orifices en cas de non-horizontalité parfaite des plateaux et/ou de remous provoqués par la chute massive des flux liquide et gazeux sur les plateaux. Pour pallier ces inconvénients, l'homme de l'art est conduit à utiliser un agencement spécifique de plusieurs plateaux dont le dernier est pourvu de moyens de collecte et de distribution des phases liquide et gazeuse, soit sous forme séparée tel que décrit par exemple dans le brevet US 5 232 283 ou soit sous forme de mélange tel que décrit par exemple dans les brevets US 4 126 539, US 4 126 540, US 4 836 989, US 5 462 719. L'inconvénient majeur de ces systèmes provient du fait que compte tenu de la faible quantité de liquide par rapport au gaz, l'homme de l'art est conduit pour tenter d'arroser correctement toute la surface dudit lit de solides granulaires à utiliser une densité de cheminées importante souvent supérieure à 80 cheminées au mètre carré tel que mentionné dans le brevet FR 2 745 202. La vitesse du gaz dans les cheminées varie généralement de 0,5 à 5 centimètres par seconde (cm/s) et la vitesse du liquide varie généralement de 0,05 à 1 cm/s. Ces vitesses sont cependant trop faibles pour permettre à la fois le mélange et la dispersion du gaz et du liquide. Du fait de cette absence de dispersion du liquide en sortie des cheminées l'homme de l'art est souvent contraint d' installer des systèmes type plaque de déflection en sortie d'orifices ou de cheminées comme cela est par exemple décrit dans les documents de brevets FR 2 654 952, WO9746303 et US 5 799 877. Tous les systèmes type brise-jet décrits dans l'art antérieur sont associés à un trou et/ou une cheminée. Leur forme est soit de type plaque d'impact pleine tel que décrit dans les brevets US 5 799 877, FR 2 654 952 et US 4 140 625 en aval d'un venturi, soit celle d'un réceptacle avec cloisons de très faible hauteur tel que décrit dans le brevet WO 9746303. Les inconvénients de ce type de système proviennent du fait que le brise-jet ne couvre pas toute la surface du réacteur et que la partie de solides granulaires située en dessous dudit système de brise-jet aura très peu de chance d'être arrosée par du liquide.

L'art antérieur peut aussi être illustré par les brevets US 3 524 731 et US 3 431 084 et par le brevet US 3 824 080, qui décrit un système de mélange d'une phase gaz et d'une phase liquide présentant un plateau collecteur de la phase liquide, qui les fait converger vers une zone centrale de mélange dans laquelle la phase liquide va entrer en collision avec la phase vapeur. Aucun de ces brevets n'enseigne ou ne suggère un système dispersif permettant une totale utilisation du lit de solide granulaire.

La présente invention constitue une amélioration du dispositif de distribution d'un mélange polyphasique décrit dans la demande de brevet FR 2 807673 qui permet d'alimenter au moins un lit de solide granulaire par au moins une phase gazeuse et au moins une phase liquide , les deux phases étant en écoulement descendant à travers ledit lit de solide granulaire. Pour clarifier les différentes appellations, nous parlerons de dispositif de distribution sans autre qualificatif pour désigner le dispositif de distribution décrit dans le brevet FR 2 807673 et nous parlerons de dispositif de distribution amélioré pour désigner le dispositif de distribution décrit dans le brevet FR 2 807673 et comportant l'amélioration décrite dans la présente demande.

L'objet de la présente demande est défini dans le libellé de la revendication 1.

D'autres aspects facultatifs sont définis dans les revendications dépendantes 2 à 16.

Plus précisément, l'invention concerne un dispositif pour distribuer un mélange polyphasique constitué d' au moins une phase gazeuse et au moins une phase liquide, ledit mélange étant en écoulement descendant à travers au moins un lit de solides granulaires, et le dit dispositif comportant :
- au moins un plateau (P) situé au-dessus d'un desdits lits de solides granulaires,
- une pluralité de canaux mélangeurs (21) desdites phases liquide et gazeuse, chacun desdits canaux comportant au moins une section de passage supérieure (22) laissant passer la majorité de la phase gazeuse, et au moins une section de passage inférieure (23) permettant la communication du mélange formé à l'intérieur desdits canaux mélangeurs avec un lit de solides granulaires, et lesdits canaux mélangeurs (21) étant pourvus sur au moins une partie de leur hauteur d'une ou de plusieurs sections de passage latérale (26) permettant le passage de la phase liquide et éventuellement d'une mineure partie de la phase gazeuse à l'intérieur des canaux mélangeurs,
- un système dispersif (28) de type brise-jet ayant une porosité contrôlée disposé au dessous de la section de passage inférieure (23) et au-dessus du lit de solides granulaires, on dispose au moins un système dispersif (28) de type brise-jet ayant une porosité contrôlée, le dit dispositif de distribution étant caractérisé en ce que le système dispersif est muni sur une partie au moins de son périmètre de rebords (100) ou (101).

L'invention sera mieux comprise au vu des figures parmi lesquelles :
- la figure 1 représente une coupe axiale du dispositif selon l'invention,
- la figure 2 illustre une vue d'ensemble d'un plateau distributeur associé à des tubes de mélange et à un élément dispersif poreux,
- les figures 3 et 4 montrent une vue schématique des systèmes dispersifs poreux munis de rebords associés à un ou plusieurs tubes de mélange percés de fentes ou d'orifices,
- les figures 5, 6, 7 visualisent les zones de faible et forte présence de liquide selon l'art antérieur et selon l'invention.

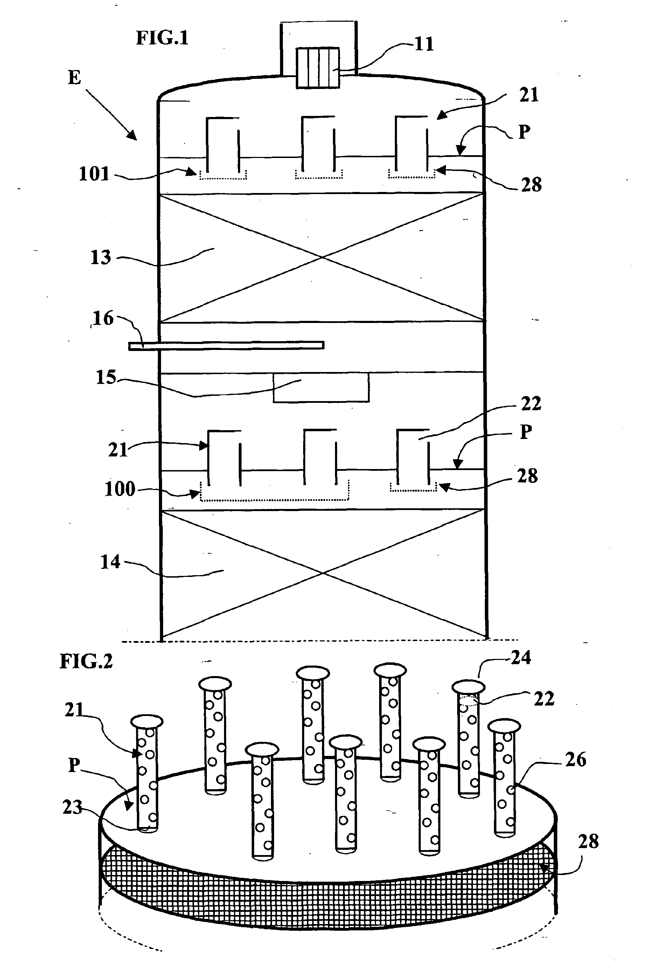

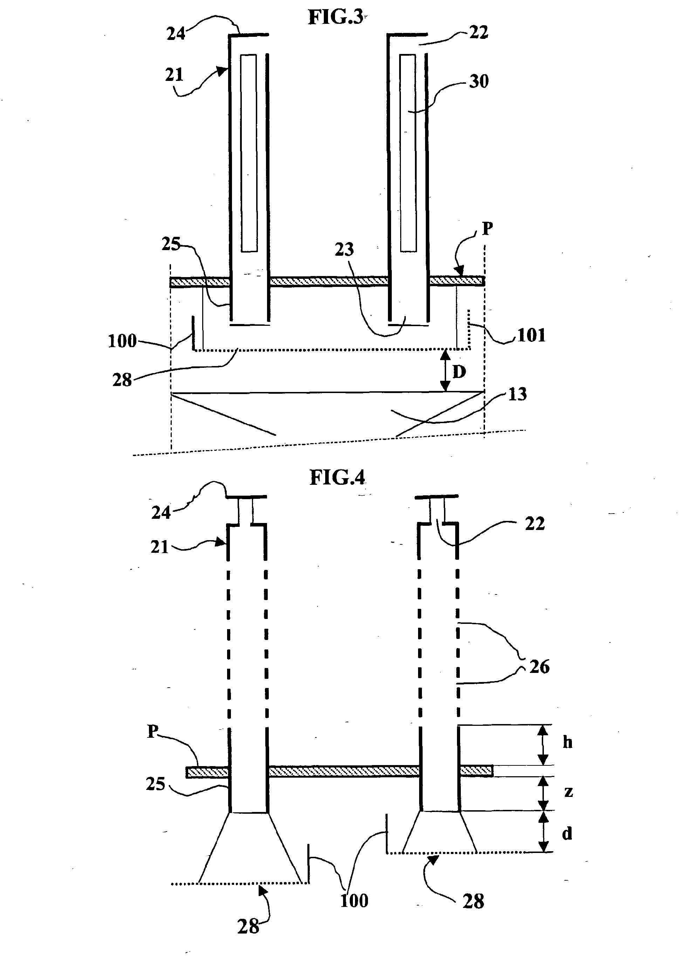

Le ou les lits de solide granulaire seront contenus dans une enceinte réactionnelle , appelé par la suite réacteur, qui comporte de manière générale en suivant le sens d'écoulement des phases, un système d'introduction des phases (non représenté sur la figure1), un dispositif (11) servant à prémélanger les dites phases, un dispositif de distribution amélioré du mélange polyphasique, supporté par un plateau (P), et comportant les éléments (21), (28) et (100) ou (101) situé dans la partie
supérieure de la dite enceinte (E) ou entre deux lits de solide granulaire (13) et (14) de la dite enceinte. Le dispositif de distribution amélioré permet d'alimenter un ou plusieurs lits granulaires (13) et (14). Dans le cas où l'enceinte réactionnelle comporte plusieurs lits granulaires disposés en série le long de la dite enceinte, chacun d'entre eux peut être alimenté par un dispositif de distribution amélioré. Dans le cas le plus général, l'enceinte pourra comporter entre deux lits granulaires consécutifs et en amont du dispositif de distribution amélioré, un système d'introduction d'une fluide auxiliaire gaz ou liquide (16) et un système de mélange (15) dudit fluide auxiliaire avec les phases gaz et liquide issues du lit immédiatement supérieur (13). Un système de mélange (15), souvent appelé dans le contexte de l'invention « boite de quench », fait l'objet de description détaillée dans d'autres brevets, et notamment la demande de brevet FR 01/06213 de la demanderesse pour sa forme la plus évoluée. Ce système de mélange (15) est entièrement compatible avec le dispositif décrit dans la présente demande. Le dispositif de distribution amélioré de la présente demande , dont la figure 2 donne une illustration schématique sans montrer les rebords, comprend dans sa forme la plus générale :
1) au moins un plateau (P) situé au dessus d'un desdits lits de solide granulaire
2) une pluralité de canaux mélangeurs (21) de forme sensiblement cylindrique et -- orientés selon un axe sensiblement vertical, alimentés par lesdites phases liquide et gazeuse, permettant de réaliser leur mélange. Chacun des canaux comporte au moins une section de passage supérieure (22) et au moins une section de passage inférieure (23) permettant la communication du mélange formé à l'intérieur des dits canaux mélangeurs avec un lit de solides granulaires, les dits canaux mélangeurs étant pourvus sur au moins une partie de leur hauteur d'une ou de plusieurs sections de passage latérales (26). La dite section de passage supérieure (22) laisse passer la majorité de la phase gazeuse et les dites sections de passage latérales (26) permettent respectivement le passage de la phase liquide à l'intérieur des canaux mélangeurs et éventuellement d' une mineure partie de la phase gazeuse.
3) au moins un système dispersif de type brise-jet (28) situé au dessous de la section de passage inférieure (23) et au dessus du lit de solides granulaires, ce système pouvant être associé à chaque canal mélangeur comme représenté sur la figure 4, être commun à plusieurs canaux mélangeurs comme représenté figure 3, ou encore être commun à l'ensemble des canaux mélangeurs issu d'un plateau (P) comme représente sur la figure 2. Chaque système dispersif a une géométrie sensiblement plane et horizontale, mais peut avoir un périmètre de forme quelconque. Il possède une porosité contrôlée et il peut être muni sur une portion au moins de son périmètre de rebords (100) (figure 3) de forme également quelconque, ces rebords pouvant éventuellement avoir eux mêmes une porosité (101) ( figure 3).

Le système dispersif peut être suspendu au plateau P ou l'extrémité inférieure des canaux mélangeurs.

Les canaux mélangeurs, de forme sensiblement cylindrique et à section pratiquement constante, auront des diamètres compris entre 0,3 et 10 cm et préférentiellement compris entre 1 et 5 cm. Leur hauteur sera comprise entre 100 et 500 millimètres et de préférence entre 250 et 400 millimètres. Le nombre de canaux mélangeurs par unité de section du plateau sera compris entre 1 et 80 canaux par mètre carré, et préférentiellement compris entre 5 et 50 canaux par mètre carré. Dans certains cas, il pourra être intéressant d'aménager au niveau du plateau (P) des orifices de drainage de la phase liquide. La section de passage de l'ensemble de ces orifices sera telle que la fraction de débit de la phase liquide passant par ces orifices de drainage sera inférieure à 10% du débit total de la phase liquide en circulation et de préférence inférieur à 5% du débit total.

Il convient de noter que conformément aux figures 3 et 4 l'ensemble des tubes mélangeurs est solidaire du plateau (P) et se prolonge au dessous du plateau (P) d'une distance (z) correspondant à la zone notée (25) sur la figure 4 la valeur de cette distance (z) étant inférieure ou égale à la distance (d) qui sépare l'extrémité inférieure d'un tube mélangeur (23) du système dispersif (28) auquel il est associé.

La distance (d) est généralement comprise entre 5 mm et 500 mm.

De plus la distance (D) séparant le système dispersif type brise-jet du lit de solides granulaires situé immédiatement au dessous, est choisie de manière à conserver l'état de mélange des phases gazeuse et liquide autant que possible tel qu'il est en sortie du tube de mélange. Dans la pratique, cette distance (D) sera comprise entre 0 et 500 mm. Les tubes mélangeurs sont surmontés à leur partie supérieure de chapeaux (24) destinés à briser les jets provenant soit de la canalisation d'entrée du liquide dans le réacteur (non représentée sur les figures), soit du lit de solides granulaires supérieur, c'est à dire situé immédiatement au dessus du dispositif de distribution considéré, et à permettre la séparation du gaz et du liquide. Ces chapeaux (24) pourront avoir des formes quelconques, bien connues en soi de l'homme de l'art.

L'entrée de chacune des phases gaz et liquide dans les tubes de mélange peut se faire autant que possible de manière séparée, la phase gaz entrant par les sections supérieures (22) protégées de l'entrée de liquide par les chapeaux (24) et la phase liquide entrant par les sections latérales (26) avec éventuellement une faible fraction de la phase gaz.

Les canaux mélangeurs (21) sont munis de sections de passage latérale (26) qui sont des orifices (figure 3) ou des fentes (30 figure 4) de forme quelconque percés à la périphérie des tubes de mélange sur un ou plusieurs niveaux et de préférence sur au moins trois niveaux. Il est important de respecter une distance minimale (h) entre la face supérieure du plateau (P) qui reçoit le liquide, et les orifices situés sur le niveau le plus proche de la dite face supérieure ou, dans le cas de fentes, entre le bas de cette fente et la face supérieure du plateau (P). Cette hauteur (h) sera souvent comprise entre 5 et 250 millimètres et de préférence entre 50 et 100 millimètres. De plus les orifices ou fentes seront percés à la périphérie des tubes de mélange de manière à former dans l'épaisseur de la paroi desdits tubes de mélange, un angle alpha par rapport à l'horizontale dont la valeur pourra varier entre 0 et 60° et de préférence entre 0 et 45°.Cet angle sera avantageusement dirigé vers le bas de manière à favoriser le contact entre la phase liquide entrant par les orifices (26) et la phase gaz entrant par les sections supérieures (22), en imprimant une composante verticale descendante à la dite phase gaz.

Au niveau de l'entrée des phases dans l'enceinte réactionnelle, celle ci peut se faire de manière séparée ou déjà à l'état de prémélange. De manière plus précise, la partie supérieure de l'enceinte réactionnelle (E) schématisée sur la figure 1, peut comporter en amont du lit de solide granulaire (13) un prédistributeur (11) qui permet d'effectuer un premier mélange imparfait des phases gaz et liquide. Le prémélange des phases gaz et liquide distribué par le dispositif (11) s'écoule de manière descendante jusqu'au premier plateau distributeur (P).

Il convient également de noter que le système dispersif type brise-jet peut être selon les cas associé à chaque tube de mélange (figure 4) individuellement, associé à plusieurs tubes de mélange (figure 3), voire à l'ensemble des tubes de mélange contenus sur un plateau (P). De plus, ces systèmes dispersifs peuvent être étagés selon plusieurs niveaux comme cela est schématisé sur la figure 4.

Dans la demande de brevet FR 2 807673, il a été précisé que la porosité du système dispersif de type brise-jet , définie par le rapport de la surface vide à la surface totale, varie dans un rapport de 2% à 80 %, de préférence de 5% à 50% et le plus souvent de 5% à 30%. La gamme de porosité du système dispersif selon l'invention est identique à celle de la demande de brevet FR 2 807 673 et est choisie en fonction des vitesses superficielles des phases gaz et liquide, des masses volumiques et des viscosités de chacune des phases, et de la tension superficielle en relation avec la nature de la surface du système dispersif.

Lorsque les systèmes dispersifs ne se trouvent pas nécessairement dans les mêmes plans horizontaux, la projection sur une section du réacteur des systèmes dispersifs appartenant à des plans différents est telle qu'elle ne fait sensiblement pas apparaître de zone de recouvrement importante et couvre sensiblement la totalité de la section du réacteur. La distance séparant deux plans différents est généralement comprise entre 1 et 250 mm, de préférence entre 5 et 180 mm et plus particulièrement entre 10 et 80 mm. Cette disposition des systèmes dispersifs s'étageant sur plusieurs plans, permet un meilleur écoulement du gaz et une meilleure homogénéisation de ce dernier sur l'ensemble de la section du réacteur. En cas de débit fluctuant de la phase gaz, cet étagement permet aussi une évacuation sans à coup d'un éventuel excédent momentané de ce gaz.

Les systèmes dispersifs peuvent avoir une forme géométrique quelconque, mais seront le plus souvent de forme sensiblement circulaire, rectangulaire ou triangulaire. Ils seront préférentiellement situés dans des plans horizontaux, ou le plus proche possible de plans horizontaux, car cette condition est difficile à réaliser sur des enceintes industrielles dont le diamètre peut atteindre 5 mètres ou plus. L'amélioration proposée permet d'être plus tolérant sur cette contrainte d'horizontalité comme il sera développé plus loin.

Les avantages du dispositif de distribution amélioré par rapport à l'art antérieur peuvent se résumer de la manière suivante :
a) La relativement faible densité des canaux mélangeurs, préférentiellement de 5 à 50 à canaux par mètre carré, et leur diamètre, préférentiellement compris entre 1 cm et 5 cm, permet d'augmenter les vitesses des-phases gaz et liquide à l'intérieur du canal mélangeur et favorise donc le contact et le bon mélange des phases.
b) Le système dispersif couvrant la quasi totalité de la section du réacteur, permet de répartir ce mélange sur l'ensemble de la section, y compris, compte tenu de la porosité propre du système dispersif, sur les zones de la dite section correspondant à la projection du système dispersif qui ne seraient pas irriguées en l'absence de ladite porosité.
c) Il a été découvert depuis la date de dépôt de la demande FR 2,807673, que l'adjonction de rebords à une partie au moins des systèmes dispersifs permet d'assurer de manière plus homogène la bonne répartition du mélange des phase gaz et liquide issu des tubes de mélange. En effet, ces rebords vont permettre la création d'une certaine rétention du mélange gaz et liquide et garantir que l'ensemble de la porosité du système dispersif soit bien alimentée. Ceci sera particulièrement intéressant sur de grosses unités industrielles dont le diamètre peut atteindre 5 mètres et plus, pour lesquelles il est toujours difficile de garantir une parfaite horizontalité des plateaux (P) et donc des systèmes dispersifs associés. Sans de tels rebords, le mélange gaz et liquide arrivant sur un système dispersif pourrait préférentiellement s'écouler sur une certaine portion dudit système, laissant l'autre portion non irriguée.

Les rebords peuvent avoir des hauteurs comprises entre 0,2 et 1 fois le diamètre des canaux et par exemple entre 2 et 50 mm. Ils peuvent avoir eux mêmes une porosité comprise entre 0 et 80 %. Ils peuvent être inclinés ou non par rapport à la verticale, et leur inclinaison sera généralement comprise entre -40° et +60° et préférentiellement entre -30°et+45°, ces valeurs d'angle étant repérées par rapport à la verticale, les valeurs positives correspondant à des rebords inclinés vers l'extérieur du système dispersif, et les valeurs négatives correspondant à des rebords rentrant vers l'intérieur du système dispersif. Bien entendu, lorsque des systèmes dispersifs appartenant à des plans horizontaux différents seront munis de rebords, il faudra que la distance séparant ces plans horizontaux soit supérieure à la hauteur des rebords.

Les rebords pourront concerner une partie seulement des systèmes dispersifs, l'autre partie n'ayant pas de tels rebords. On préférera souvent équiper de rebords les systèmes dispersifs situés sur les plans les plus proches du lit de solide granulaire. Dans certains cas, il pourra même être avantageux qu'un système dispersif donné possède des rebords sur une partie seulement de son périmètre. La forme géométrique précise de ces rebords pourra varier, en particulier l'extrémité supérieure des rebords pourra être incurvée. Au voisinage du rebord d'un système dispersif, la porosité du système dispersif sera avantageusement nulle. On entend par voisinage du rebord d'un système dispersif, la zone située à une distance inférieure ou égale à 30 mm du rebord et préférentiellement inférieure ou égale à 20 mm du rebord.

Une des fonctions de ces rebords et de leur voisinage à porosité nulle, est d'effectuer une retenue vis à vis de certaines impuretés éventuellement contenues dans la charge liquide, particulièrement lorsque celle-ci est constituée d'hydrocarbures lourds tels que des coupes à point d'ébullition supérieur à 350°C, comme cela est le cas dans les unités d'hydrotraitement de coupes lourdes type gazole.

Dans ce cas, la zone de voisinage des rebords se charge progressivement en ces impuretés en évitant de la sorte la contamination du lit de solides granulaires.

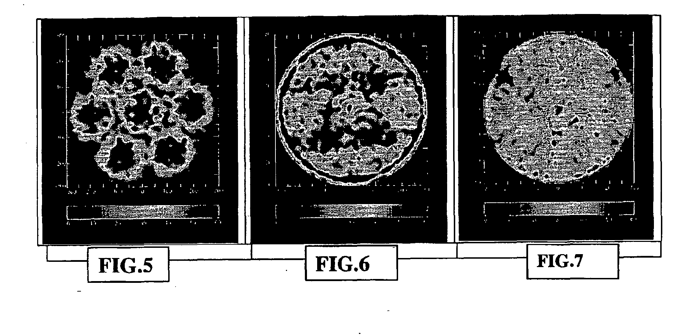

L'exemple comparatif suivant permettra de bien apprécier les avantages procurés par la présence de rebords. Les mesures réalisées sont des mesures de répartition liquide effectuées dans une section d'un réacteur de diamètre de 600 mm. Elles sont réalisées à l'aide d'un appareil tomographe à rayon gamma qui permet de visualiser les zones de forte présence liquide, en noir sur les figures et les zones de faible présence liquide en blanc ou gris sur les figures 5, 6, 7 (vue de dessous).

Les trois systèmes comparés sont les suivants :
1) un système de distribution selon l'art antérieur comportant 7 tubes de mélange de diamètre intérieur 50 millimètres et de hauteur 300 millimètres, mais sans système dispersif.
2) Un système de distribution selon la demande FR 2,807673 comportant 7 tubes de mélange associé à 3 systèmes dispersifs de type brise jet poreux ayant une porosité comprise entre 10 et 40% et disposés sur un même plan sensiblement horizontal. Le diamètre de chaque système dispersif est environ un tiers du diamètre de l'enceinte.
3) Un système de distribution amélioré comportant 7 tubes de mélange identiques à ceux du cas précédent, associés à 3 systèmes dispersifs de type brise jet poreux ayant une porosité comprise entre 10 et 40%, et muni de rebords non poreux de hauteur 20 millimètres, sensiblement verticaux selon l'invention.

La phase liquide est constituée d'une coupe hydrocarbure majoritairement en C7 et la phase gaz est constituée par de l'azote. Le rapport volumique des débits de gaz sur le débit de liquide est peut être compris entre 20 et 100 .

Sur la figure 5 (correspondant au système de distribution selon l'art antérieur), on vomit très nettement que la répartition du liquide est mauvaise : La trace des 7 tubes de mélange est visible, ce qui indique une forte présence de liquide au droit des sections de sortie de ces tubes de mélange. Sur la figure 6 (correspondant au système de distribution selon la demande FR 2 807 673), le liquide est mieux distribué puisque l'on ne distingue plus la trace des tubes de mélange. Par contre on note un léger débordement du liquide au niveau des trois systèmes dispersifs dont la trace est encore visible. Sur la figure 7, correspondant à la présente invention, la trace des trois systèmes dispersifs a complètement disparu, ce qui indique une répartition homogène du liquide sur l'ensemble de la section du réacteur. Cette répartition est conservée dans la plage des rapports volumiques des débits de gaz et de liquide exemplifiés.

## Revendications

1. Dispositif pour distribuer un mélange polyphasique constitué d' au moins une phase gazeuse et au moins une phase liquide, ledit mélange étant en écoulement descendant à travers au moins un lit de solides granulaires, et le dit dispositif comportant :
- au moins un plateau (P) situé au-dessus d'un desdits lits de solides granulaires,
- une pluralité de canaux mélangeurs (21) desdites phases liquide et gazeuse, chacun desdits canaux comportant au moins une section de passage supérieure (22) laissant passer la majorité de la phase gazeuse, et au moins une section de passage inférieure (23) permettant la communication du mélange formé à l'intérieur desdits canaux mélangeurs avec un lit de solides granulaires, et lesdits canaux mélangeurs (21) étant pourvus sur au moins une partie de leur hauteur d'une ou de plusieurs sections de passage latérale (26) permettant le passage de la phase liquide et éventuellement d'une mineure partie de la phase gazeuse à l'intérieur des canaux mélangeurs,
- un système dispersif (28) de type brise-jet ayant une porosité contrôlée disposé au dessous de la section de passage inférieure (23) et au-dessus du lit de solides granulaires, le dit dispositif de distribution étant **caractérisé en ce que** le système dispersif est muni sur une partie au moins de son périmètre de rebords (100) ou (101).

2. Dispositif selon la revendication 1 dans lequel le système dispersif type brise-jet a une porosité de 2% à 80% , de préférence comprise entre 5 et 50 %, et de manière encore préférée comprise entre 5 et 30%.

3. Dispositif selon la revendication 1 ou 2 dans lequel on associe un système dispersif type brise-jet à chaque canal mélangeur.

4. Dispositif selon la revendication 1 ou 2 dans lequel on associe un système dispersif type brise-jet à plusieurs canaux mélangeurs voisins les uns des autres.

5. Dispositif selon la revendication 1 ou 2 dans lequel on associe un système dispersif type brise-jet à l'ensemble des canaux mélangeurs du dispositif de distribution.

6. Dispositif selon l'une des revendications 1 à 5 dans lequel l'extrémité inférieure des canaux mélangeurs est située à une distance (d) de 5 à 500 millimètres du système dispersif type brise-jet.

7. Dispositif selon l'une quelconque des revendications 1 à 6 dans lequel le système dispersif type brise-jet est situé à une distance (D) du lit de solide granulaire, comprise entre 0 et 500 millimètres.

8. Dispositif selon l'une quelconque des revendications 1 à 7 dans lequel la densité des canaux mélangeurs est de 1 à 80 canaux par mètre carré et de préférence de 5 à 50 canaux par mètre carré.

9. Dispositif selon l'une quelconque des revendications 1 à 8 dans lequel la section des canaux mélangeurs est sensiblement constante.

10. Dispositif selon l'une quelconque des revendications 1 à 9 dans lequel la hauteur des canaux mélangeurs est comprise entre 100 et 500 millimètres et de préférence entre 250 et 400 millimètres.

11. Dispositif selon l'une quelconque des revendications 1 à 10 dans lequel les rebords ont un angle par rapport à la verticale compris entre -40° et +60°, le signe - correspondant à des rebords rentrant vers l'intérieur du système dispersif et le signe + à des rebords orientés vers l'extérieur du système dispersif.

12. Dispositif selon l'une quelconque des revendications 1 à 11 dans lequel la porosité du système dispersif est nulle au voisinage des rebords, voisinage correspondant à une distance du rebord comprise entre 30 et 0 millimètres et préférentiellement entre 20 et 0 millimètre.

13. Dispositif selon l'une quelconque des revendications 1 à 12 dans lequel les rebords d'un ou plusieurs systèmes dispersif de type brise-jet ont une hauteur comprise entre 0,2 et 1 fois le diamètre des canaux mélangeurs et avantageusement comprise entre 2 et 50 millimètres et une porosité comprise entre 0 et 80 %.

14. Dispositif selon l'une quelconque des revendications 1 à 13 dans lequel les systèmes dispersifs sont étagés sur au moins deux niveaux, ces niveaux étant distants d'une hauteur comprise entre 1 et 250 millimètres, de préférence entre 5 et 180 millimètres et de manière encore préférée entre 10 et 80 millimètres.

15. Dispositif selon l'une quelconque des revendications 1 à 14 dans lequel les systèmes dispersifs sont disposés sur plusieurs plans et dans lequel les systèmes dispersifs situés sur les plans les plus proches du lit de solide granulaire comprennent lesdits rebords.

16. Application du dispositif selon l'une quelconque des revendications 1 à 15 à la distribution d'un mélange polyphasique dont la phase gazeuse contient au moins en partie de l'hydrogène.

## Claims

1. A device for distributing a poly-phase mixture constituted by at least one gas phase and at least one liquid phase, said mixture being in downflow mode through at least one bed of granular solid, said device comprising:
• at least one tray (P) located above one of said beds of granular solid;
• a plurality of mixer conduits (21) for said liquid and gas phases, each of said conduits comprising at least one upper cross section for flow (22) allowing the passage of the majority of the gas phase, and at least one lower cross section for flow (23) allowing the mixture formed inside said mixer conduits to communicate with a bed of granular solid, said mixer conduits (21) being provided with one or more lateral cross section for flow (26) over at least a portion of their height to allow the passage of the liquid phase and possibly a minor portion of the gas phase inside the mixer conduits;
• a jet breaker type dispersive system (28) having a controlled porosity disposed below the lower cross section for flow (23) and above the bed of granular solids, said distribution device being **characterized in that** at least a portion of the perimeter of the dispersive system is provided with rims (100) or (101).

2. A device according to claim 1, in which the jet breaker type dispersive system has a porosity of 2% to 80%, preferably in the range 5% to 50%, and more preferably in the range 5% to 30%.

3. A device according to claim 1 or claim 2, in which a jet breaker type dispersive system is associated with each mixer conduit.

4. A device according to claim 1 or claim 2, in which a jet breaker type dispersive system is associated with a plurality of mixer conduits that are close to each other.

5. A device according to claim 1 or claim 2, in which a jet breaker type dispersive system is associated with all of the mixer conduits of the distribution device.

6. A device according to one of claims 1 to 5, in which the lower end of the mixer conduits is located at a distance (d) of 5 to 500 millimetres from the jet breaker type dispersive system.

7. A device according to any one of claims 1 to 6, in which the jet breaker type dispersive system is located at a distance (D) from the bed of granular solid, is in the range 0 to 500 millimetres.

8. A device according to any one of claims 1 to 7, in which the density of the mixer conduits is 1 to 80 conduits per square metre, preferably 5 to 50 conduits per square metre.

9. A device according to any one of claims 1 to 8, in which the cross section of the mixer conduits is substantially constant.

10. A device according to any one of claims 1 to 9, in which the height of the mixer conduits is in the range 100 to 500 millimetres, preferably in the range 250 to 400 millimetres.

11. A device according to any one of claims 1 to 10, in which the angle of the rims with respect to the vertical is in the range -40° to +60°, the negative sign corresponding to rims inclined inwardly of the dispersive system and the positive sign corresponding to rims orientated outwardly of the dispersive system.

12. A device according to any one of claims 1 to 11, in which the porosity of the dispersive system is zero near to the rims, "near" corresponding to a distance from the rim in the range 30 to 0 millimetres, preferably in the range 20 to 0 millimetres.

13. A device according to any one of claims 1 to 12, in which the height of the rims of one or more jet breaker type dispersive systems is 0.2 to 1 time the diameter of the mixer conduits and advantageously in the range 2 to 50 millimetres, with a porosity in the range 0 to 80%.

14. A device according to any one of claims 1 to 13, in which the dispersive systems are staggered over at least two levels, said levels being spaced apart by a height in the range 1 tn 250 millimetres, preferably in the range 5 to 180 millimetres and more preferably in the range 10 to 80 millimetres.

15. A device according to any one of claims 1 to 14, in which the dispersive systems arc disposed over a plurality of planes and in which the dispersive systems located on planes closest to the bed of granular solid comprise said rims.

16. Application of a device according to any one of claims 1 to 15 to distributing a poly-phase mixture at least part of the gas phase of which is constituted by hydrogen.

## Patentansprüche

1. Vorrichtung zur Verteilung einer mehrphasigen Mischung, die aus mindestens einer Gasphase und mindestens einer Flüssigphase besteht, wobei die Mischung sich in einer Abwärtsströmung durch mindestens ein Schüttbett befindet, und wobei die Vorrichtung Folgendes aufweist:
- mindestens einen Boden (P), der oberhalb eines der Schüttbetten gelegen ist,
- mehrere Mischkanäle (21) für die Flüssig- und Gasphasen, wobei jeder der Kanäle mindestens einen oberen Durchlassabschnitt (22) aufweist, der den überwiegenden Teil der Gasphase hindurchlässt, sowie mindestens einen unteren Durchlassabschnitt (23), der es ermöglicht, dass die Mischung, welche sich im Inneren der Mischkanäle gebildet hat, mit einem Schüttbett in Verbindung tritt, und wobei die Mischkanäle (21) über mindestens einen Teil ihrer Höhe mit einem oder mehreren seitlichen Durchlassabschnitten (26) versehen sind, die es ermöglichen, dass die Flüssigphase und möglicherweise ein kleiner Teil der Gasphase ins Innere der Mischkanäle gelangt,
- ein Dispersionssystem (28) vom Typ Strahlregler mit einem bestimmten Durchlässigkeitsgrad, welches unter dem unteren Durchlassabschnitt (23) und über dem Schüttbett angeordnet ist, wobei die Verteilungsvorrichtung **dadurch gekennzeichnet ist, dass** das Dispersionssystem über mindestens einen Abschnitt seines Umfangs mit Rändern (100) oder (101) versehen ist.

2. Vorrichtung nach Anspruch 1, wobei das Dispersionssystem vom Typ Strahlregler einen Durchlässigkeitsgrad von 2 bis 80 %, vorzugsweise im Bereich von 5 bis 50 % und mit noch größerem Vorzug im Bereich von 5 bis 30 % hat.

3. Vorrichtung nach Anspruch 1 oder 2, wobei jedem Mischkanal ein Dispersionssystem des Typs Strahlregler zugeordnet wird.

4. Vorrichtung nach Anspruch 1 oder 2, wobei mehreren Mischkanälen, die nebeneinander liegen, ein Dispersionssystem des Typs Strahlregler zugeordnet wird.

5. Vorrichtung nach Anspruch 1 oder 2, wobei der Gesamtheit der Mischkanäle der Verteilungsvorrichtung ein Dispersionssystem des Typs Strahlregler zugeordnet wird.

6. Vorrichtung nach einem der Ansprüche 1 bis 5, wobei sich das untere Ende der Mischkanäle in einer Entfernung (d) von 5 bis 500 Millimetern vom Dispersionssystem des Typs Strahlregler befindet.

7. Vorrichtung nach einem beliebigen der Ansprüche 1 bis 6, wobei sich das Dispersionssystem des Typs Strahlregler in einem Abstand (D) vom Schüttbett befindet, der im Bereich von 0 bis 500 Millimetern liegt.

8. Vorrichtung nach einem beliebigen der Ansprüche 1 bis 7, wobei die Dichte an Mischkanälen 1 bis 80 Kanäle pro Quadratmeter, und vorzugsweise 5 bis 50 Kanäle pro Quadratmeter, beträgt.

9. Vorrichtung nach einem beliebigen der Ansprüche 1 bis 8, wobei der Querschnitt der Mischkanäle im Wesentlichen konstant ist.

10. Vorrichtung nach einem beliebigen der Ansprüche 1 bis 9, wobei die Höhe der Mischkanäle im Bereich von 100 bis 500 Millimetern und vorzugsweise von 250 bis 400 Millimetern liegt.

11. Vorrichtung nach einem beliebigen der Ansprüche 1 bis 10, wobei die Ränder, unter Bezugnahme auf die Vertikale, einen Winkel im Bereich von -40° bis +60° haben, wobei das Zeichen - Rändern entspricht, die zum Innenbereich des Dispersionssystems weisen, und das Zeichen + Rändern, die zum Außenbereich des Dispersionssystems ausgerichtet sind.

12. Vorrichtung nach einem beliebigen der Ansprüche 1 bis 11, wobei der Durchlässigkeitsgrad des Dispersionssystems im Nahbereich der Ränder gleich null ist, wobei der Nahbereich einer Entfernung vom Rand entspricht, die im Bereich von 30 bis 0 Millimetern und vorzugsweise von 20 bis 0 Millimetern liegt.

13. Vorrichtung nach einem beliebigen der Ansprüche 1 bis 12, wobei die Ränder eines oder mehrerer Dispersionssysteme vom Typ Strahlregler eine Höhe haben, die im Bereich von 0,2- bis 1-mal dem Durchmesser der Mischkanäle und vorteilhafterweise im Bereich von 2 bis 50 Millimeter liegt, und einen Durchlässigkeitsgrad im Bereich von 0 bis 80 %.

14. Vorrichtung nach einem beliebigen der Ansprüche 1 bis 13, wobei die Dispersionssysteme abgestuft auf mindestens zwei Höhenlagen angeordnet sind, wobei diese Höhenlagen einen Höhenabstand haben, der im Bereich von 1 bis 250 Millimetern, vorzugsweise von 5 bis 180 Millimetern und mit noch größerem Vorzug im Bereich von 10 bis 80 Millimetern liegt.

15. Vorrichtung nach einem beliebigen der Ansprüche 1 bis 14, wobei die Dispersionssysteme auf mehreren Ebenen angeordnet sind und wobei die Dispersionssysteme, die sich auf den Ebenen befinden, welche dem Schüttbett am nächsten gelegen sind, die Ränder umfassen.

16. Anwendung der Vorrichtung nach einem beliebigen der Ansprüche 1, bis 15, zur Verteilung einer mehrphasigen Mischung, deren Gasphase mindestens teilweise Wasserstoff enthält.
